# EUROPEAN PATENT APPLICATION

(11) **EP 4 406 408 A1**
(43) Date of publication of application: **31.07.2024**
(21) Application number: 24150610.4
(22) Date of filing: 08.01.2024
(51) Int. Cl.: A01G 23/00, B66D 1/48, B66D 1/54, B66D 1/58

(54) **A WINCH WITH A MECHANISM FOR PREVENTING UNCONTROLLED SHUTDOWN OF A TRACTOR DURING WINDING OF A ROPE ON THE WINCH DRUM AND A METHOD FOR PREVENTING INTERRUPTIONS DURING WORK WITH THE WINCH**

(30) Priority: 25.01.2023 SI 202300015
(71) Applicant: Pisek - Vitli Krpan, d.o.o., 3240 Smarje pri Jelsah (SI)
(72) Inventor: PISEK, Franc, 3240 Smarje pri Jelsah (SI)
(74) Representative: Patentni Biro AF d.o.o.

(57) **Abstract**

Winch with a mechanism for preventing uncontrolled shutdown of a tractor during winding of a rope (4) on the winch drum and a method for preventing interruption during work with the winch. A device for measuring rotation of the cardan shaft is provided, and the measured values are sent to a controller with a pre-programmed minimal rotation values representing a condition for performing the function of winding. Said controller may be designed in such a manner that in case of a drop in rotation below the pre-programmed threshold the winding function is immediately terminated, which prevents the tractor from shutting down.

## Description

### Field of the invention

The present invention belongs to the field of forestry winches, more precisely to the field of hydraulic winch control. The invention also touches the field of devices for timely termination of load pulling. The invention relates to a winch with a mechanism for preventing uncontrolled shutdown of a tractor during winding of a rope on the winch drum and a method for preventing interruption during work with the winch.

### Background of the invention and the technical problem

Forestry winches are used for pulling load with a wire rope, which is being wound on a winch drum, thus pulling the load towards the winch. Forestry winches can be provided with one or two drums, wherein the control of the winch can be either mechanical or electrohydraulic. Lately, forestry winches with electrohydrulic control prevail. Work with such winches is easier, as the user can attach the logs and at the same time control/manage the winch without having to walk from the site of attaching the wire rope to the winch. Even more importantly, the user can stand away from the working area of the winch and can thus avoid any potentially dangerous situations during winch operation.

The trends in wood processing follow the modernization and thus lowering the costs is desired. It is getting increasingly important that the tractor operates at optimal revolutions (rotations), as this also leads to optimized fuel consumption. Further, the tractor driver, user of the winch and the person attaching logs to the winch is usually the same person.

In practice, a situation may occur that during winding the load on the cardan (PTO) shaft is so large that the tractor shuts down in case the user is not paying attention and timely terminates pulling. It is particularly challenging when the user is the one who attaches the logs and during pulling the tractor shuts down either due to large loads, either due to the load being stuck or due to the tractor not having sufficient engine revolutions. New tractors have the possibility to start the tractor with a remote control, however, most users do not have this option, therefore the user has to leave the load, return to the tractor and turn it back on manually. This requires a significant physical effort from the user, particularly if the terrain is hard and the distances are large. The technical problem, which is solved by the present invention, is how to prevent the tractor from turning off during winding.

### Prior art

Patent application JP2002234468A describes a device for transferring power to a work vehicle, however, this solution does not address the connection with a forestry winch and/or interference into its operation to prevent tractor shut down.

Patent US10959366B2 relates to an agricultural machine with an internal combustion engine and an auxiliary drive, wherein said agricultural machine comprises:
- at least one power take-off;
- a device for dynamic adjustment of at least speed or torque of the cardan shaft,
- wherein said device comprises an electric machine and a prenos, which sums the drive force of the internal combustion engine and the electric machine;
- wherein the prenos comprises at least two toothed elements, which are magnetically connected; and
- wherein the gear comprises a first toothed element for connecting the internal combusion engine, a second toothed element for connecting the electric mahine and a third toothed element for driving the shaft for taking power.

Similarly as the above-mentioned document, this solution does not address the problem of tractor shut down during winch operation.

### Description of the solution to the technical problem

The present invention addresses the problems of existing solutions, as defined in the independent claims, wherein the preferred embodiments of the invention are defined in dependent claims. The essence of the invention is in that a device for measuring revolutions is provided for measuring revolutions of the cardan shaft, and the measured values are sent to a controller with a pre-programmed minimal revolution values representing a condition for performing the function of winding. In addition, maximum revolutions and histeresis can be programmed, wherein winding is performed inside the interval of minimum and maximum revolution. If during winding revolution values drop below the minimum value (minimal revolution - histeresis), winding is terminated. Said controller may be designed in such a manner that in case of a drop in revolution below the pre-programmed threshold the winding function is immediately terminated, which prevents the tractor from shutting down. Termination of winding can be achieved in any known manner. Preferably, the controller turns off the electromagnetic valve, which terns off the hydraulic cylinder of the clutch, which results in the decopling of the clutch and thus winding of the rope onto the drum.

The device for measuring revolution may be:
- a revolution speed sensor,
- an inductive sensor,
- a mechanical switch,
- a Hall sensor,
- an encoder,
- a Hall sensor arranged to measure revolution of the cardan shaft and the direction of revolution thereof.

The purpose of said sensors, switches and alternative components is detection of revolution speed of one of the rotating parts on the winch during its operation. This information (revolution speed) is sent to the controller with pre-programmed optimal operational range, wherein the controller can cause termination of pulling if necessary.

The device for measuring revolution can be installed on any site connected to the winch drive that performs revolutional movement. Some of possible measuring sites are for example on the cardan shaft on the hydraulic pump, on a block to which the hydraulic pump is connected, on any sprocket or toothed gear, on drive chains, on the winding drum or on a sheave of any pulley of the winch. In case revolution is measured on the PTO shaft, the measured value is used directly (without calculation) for controlling the winch operation and in case of exceeding the threshold value the controller triggers termination of winding. The revolutions measured on any other rotating parts of the drive mentioned above are used in a calculation, wherein the gear ratio relative to the place where the revolutions are measured, so that the revolution of the cardan shaft is calculated.

The preferred embodiment of the winch according to the invention has the device for measuring revolution installed on the block to which the hydraulic pump is connected. This is the most suitable site, as the device for measuring revolution is least exposed to external conditions, such as dirt, humidity and/or physical damages.

Preferably, the device for measuring revolution is an inductive sensor, which is in the above-mentioned preferred embodiment installed above the toothed gear installed on the hydrulic pump block, which rotates together with the cardan shaft. The sensor counts the number of impulses per time unit, wherein each of the tooths of the toothed gear is recognized, which ensures precise revolution measurement. The inductive sensor operates so that the metal near the sensor triggers a signal, while in absence of metal, there is no signal. When a tooth comes into the field of the sensor, the state is 1, wherein in case an intermediate space between two teeth (a hole or a groove) is below the sensor, the state is 0, as the metal is sufficiently removed from the sensor and the latter does not detect any metal. During a circular movement the number of pulses per rotation is the number of teeth detected by the sensor. This signals are sent to the controller, which calculates the number of revolutions on the cardan shaft. Insteal of the toothed gear any circular element with holes or other metal element with interruptions (breaks) that cause interrupted signals. According to an alternative solution, the inductive sensor is replaced with a Hall sensor, wherein the toothed gear or a similar element is provided with magnets intead of teeth or openings.

At the same time the device for measuring revolution can function as a safety element of the electrohydraulic winch without self-locking differential brake. The problem occurs when the user initiates winding and the load is either stuck or is too heavy, thus leading to increased force in the wire rope and consequently shut down of the tractor, which then leads the drum to rotate in the opposite direction. If the user still maintains the winding functions, there is a high chance that the cardan shaft will rotate in the opposite direction, which may lead to damaged tractor engine, particularly in older tractors. It is especially problematic when the operator is far from the tractor and needs more time to reach the tractor and turn it off, as during this time the tractor engine can already be damaged.

The winch with the mechanism for preventing tractor shut down during winding of the rope on the winch drum can be attached to any tractor via a PTO shaft and enables safer work and less problems with operation and control of the tractor as well as the winch.

The method of preventing interruptions during winch operation, particularly tractor shut down during winding of the rope on the winch drum, using the above-described winch comprises the following steps:
a) setting a pre-defined threshold value of revolutions of the cardan shaft on the winch controller,
b) attaching a load to the winch rope and activating pulling,
c) measuring revolutions of the cardan shaft during winding of the rope and consequent load pulling,
d) sending values of measured revolutions to the winch controller, wherein:
   i. in case the number of revolutions is above the pre-set threshold, the winch operates as before and winding of the rope onto the winch drum continues,
   ii. in case the number of values is below the pre-set threshold, winding of the rope onto the drum is terminated in any suitable manner, preferably upon detected drop in revolutions the controller sends a signal to the electromagnetic valve, which turns off the hydraulic cylinder, thus leading the couplings to move resulting in termination of winding of the rope and turning on the brake.

In the preferred embodiment, the drum has an axis around which the sprocket connected to the winch drive (cardan shaft) through a drive chain. Between the sprocket (chainring) and the winding drum couplings are provided, which are arranged to transmit the torque to the winding drum. A hydraulic cylinder is provided upstream of the sprocket, said hydraulic cylinder being controlled by electromechanical valves. If the controller sends a signal to the electromagnetic valve, the hydraulic cylinder is shifted. Since there is no pressure of the coupling on the winding drum, the rotary motion is no longer transmitted and the winding stops. At the same time, the drum brake may also be activated in any known manner. The electromagnetic valve can be replaced with any other valve or element that can perform the same function as described above.

The invention will be described in further detail based on an exemplary embodiment and figure, which shows installation of the sensor on the hydraulic pump block.

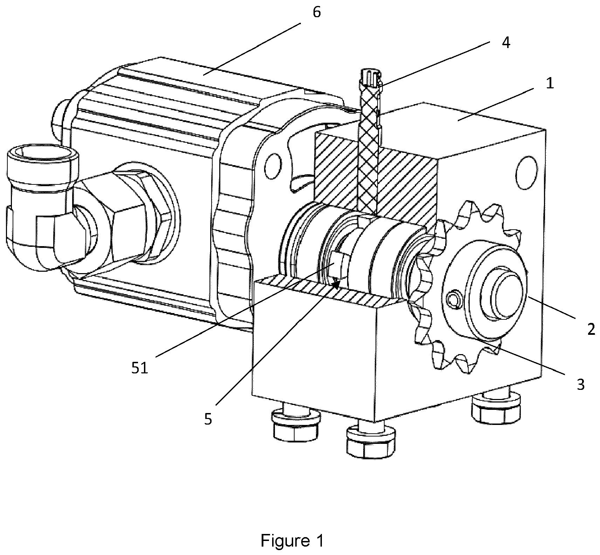

The winch with the mechanism for preventing tractor shut down during winding of the rope on the winch drum is connectable to a tractor through a cardan shaft. The winch has a drum for winding the wire rope, at the end of which load can be attached for its pulling towards the winch or the tractor, respectively. The clutch (coupling) is arranged to transmit motion for drum rotation and thus winding and unwinding of the rope, said coupling being movable by a hydraulic cylinder controlled by a valve controlled by the winch controller. To monitor the revolution speed of the cardan shaft, the block to which the hydraulic pump is attached is equipped with a sensor to detect thespeed of revolution of the shaft, as shown in Figure 1.

In the block 1 of the pump an axis of the pump 2 drive is provided, wherein the toothed gear for measuring revolution 5 is installed on said axis. The sensor 4 is mounted on the block 1 above the part where the toothed gear 5 with teeth 51 detectable by the sensor, wherein the latter can detect rotation of the axis 2 via the toothed gear 5. The sprocket 3 is connected to the sprocket on the cardan shaft and thus drives the hydraulic pump 6 and thus the toothed gear 5 for measuring revolutions. The sensor 4 is an inductive sensor, which counts the number of impulses per time unit, wherein each of the teeth is detected, which enables precise measurement of revolutions. When a tooth below the sensor, the state is 1, wherein in case an intermediate space between two teeth (a hole or a groove) is below the sensor, the state is 0, as the metal is sufficiently removed from the sensor and the latter does not detect any metal.

The system shown in figure 1 operates in the following manner: during rotational movement of the toothed gear 5 as many pulses per revolution is obtained as there are teeth 51 on the toothed gear 5. This signals are sent by the sensor 4 into the controller (not shown in the figure), which then makes the calculations and calculates revolutions of the cardan shaft.

In case the revolution values are above the pre-set threshold value, winch operation is maintained and the winding of the rope on the drum continues. In case the revolutions are below the pre-set limit value, the controller sends a signal to the electromagnetic valve, which turns off the hydraulic cylinder, and as a result, the couplings are shifted and winding is terminated, while the brake is activated.

## Claims

1. A winch with a mechanism for preventing tractor shut down during winding of a rope to a winch drum, which is through a cardan shaft connectable to a tractor, wherein the winch has a controller for controlling operation and a drum for winding the rope, at the end of which a load can be attached for pulling the load towards the winch or the tractor, respectively, **characterized in that** for monitoring revolution speed of the cardan shaft, the winch is provided with a device (4) for measuring revolutions, wherein the device (4) for measuring revolutions is any measuring equipment arranged to detect speed of a circular movement, and wherein the controller has a programmed minimal revolutions as a condition for performing the function of winding of the rope on the drum.

2. The winch according to claim 1, wherein the controller has programmed maximum revolutions and/or histeresis.

3. The winch according to claim 1 or claim 2, wherein the controller is programmed to terminate winding of the rope on the drum if the detected revolutions are below the pre-programmed minimal value or below the value that is lower than the difference between the minimal revolutions and histeresis.

4. The winch according to any of the preceding claim, wherein device for measuring revolution is arranged for detecting spead of revolution of the cardan shaft and/or any other rotatable parts on the winch during its operation, and wherein said device for measuring revolution (4) is arranged to send measured values to the winch controller.

5. The winch according to any of the preceding claim, wherein device for measuring revolution (4) is selected in the group comprising:
- a revolution speed sensor,
- an inductive sensor,
- a mechanical switch,
- a Hall sensor,
- an encoder,
- a Hall sensor arranged to measure revolution of the cardan shaft and the direction of revolution thereof.

6. The winch according to any of the preceding claim, wherein the device for measuring revolution is isntalled in any place connected to the winch drive and which is arranged to perform a circular movement.

7. The winch according to any of the preceding claim, wherein device for measuring revolution is installed on:
- the cardan shaft,
- on a hydraulic pump (6),
- on a block (1), on which the hydraulic pump (6) is installed,
- on any sprocket or toothed gear,
- on drive chains,
- on the drum, or
- on a sheave of any pulley installed on the winch.

8. The winch according to claim 7, wherein revolutions measured on the cardan shaft are used directly, while revolutions measured on any other revoluting drive parts are used in a calculation, wherein the gear ratio is used with regards to the place of measurement in order to calculate revolutions of the cardan shaft.

9. The winch according to claim 7 or 8, wherein the device for measuring revolution is installed on the block (1), to which the hydraulic pump (6) is connected.

10. The winch according to claim 9, wherein the device for measuring revolutions is an inductive sensor (4) installed on the toothed gear (5) or a metal element with holes installed on a block (1) of the hydraulic pump (6), which rotates together with the cardan shaft, wherein the sensor counts the number of impulses per time unit, as it is configured to sense each of the teeth (51) of said toothed gear (5) or each of the holes of the metal element for measurement of revolutions.

11. The winch according to claim 9, wherein the device for measuring revolution is a Hall sensor, wherein said Hall sensor is installed above an element provided with magnets, which can be detected by the Hall sensor and thus measure revolutions.

12. The winch according to any of the preceding claim, wherein termination of winding is achieved in any known manner, preferably the controller turns off the electromagnetic valve, which then turns off the hydraulic cylinder of the clutch, consequently decoupling the clutch and thus terminates winding of the rope onto the drum.

13. A method of preventing interruptions during operation of the winch according to any of the preceding claims, **characterized in that** the device for measuring revolutions (4) is used to measure revolutions of the cardan shaft, wherein the measured values are sent to the controller with programmed minimal revolutions as a condition to perform the function of winding the rope on the winch drum.

14. The method according to claim 13, **characterized in that** the method comprises the following steps:
a) setting a pre-defined threshold value of revolutions of the cardan shaft on the winch controller,
b) attaching a load to the winch rope and activating pulling,
c) measuring revolutions of the cardan shaft during winding of the rope and consequent load pulling,
d) sending values of measured revolutions to the winch controller, wherein:
e) in case the number of revolutions is above the pre-set threshold, the winch operates as before and winding of the rope onto the winch drum continues,
f) in case the number of values is below the pre-set threshold, winding of the rope onto the drum is terminated in any suitable manner, preferably upon detected drop in revolutions the controller sends a signal to the electromagnetic valve, which turns off the hydraulic cylinder, thus leading the couplings to move resulting in termination of winding of the rope and turning on the brake.
